# Europäisches Patentamt
# European Patent Office
# Office européen des brevets

(19)

(11) Numéro de publication: **0 169 770**
**B1**

(12) **FASCICULE DE BREVET EUROPÉEN**

(45) Date de publication du fascicule du brevet:
**23.11.88**

(51) Int. Cl.⁴: **C 03 B 23/035**

(21) Numéro de dépôt: **85401345.5**

(22) Date de dépôt: **03.07.85**

(54) **Procédé et dispositif pour le bombage de plaques de verre en position horizontale.**

(30) Priorité: **13.07.84 FR 8411148**

(43) Date de publication de la demande:
**29.01.86 Bulletin 86/5**

(45) Mention de la délivrance du brevet:
**23.11.88 Bulletin 88/47**

(84) Etats contractants désignés:
**BE CH DE FR GB IT LI SE**

(56) Documents cité:
**EP-A-0 106 758**
**EP-A-0 107 566**
**US-A-2 223 124**
**US-A-4 204 854**
**US-A-4 386 952**

(73) Titulaire: **SAINT-GOBAIN VITRAGE, Les Miroirs
18, avenue d'Alsace, F-92400 Courbevoie (FR)**
(84) Etats contractants désignés: **BE CH FR GB IT LI SE**

(73) Titulaire: **VEGLA Vereinigte Glaswerke GmbH,
Viktoriaallee 3-5, D-5100 Aachen (DE)**
(84) Etats contractants désignés: **DE**

(72) Inventeur: **Halberschmidt, Friedrich, Christian
Derichstrasse 16, D-5120 Herzogenrath (DE)**
Inventeur: **Reinmold, Heinz-Josef,
Schervierstrasse 6, D-5100 Aachen (DE)**
Inventeur: **Schwarzenberg, Norbert,
Wendelinusstrasse 45, D-5120 Herzogenrath (DE)**
Inventeur: **Radermacher, Herbert, Belven 118,
Faeren (BE)**
Inventeur: **Blank, Kurt, Haselsteig 13, D-5100
Aachen (DE)**
Inventeur: **Audi, Josef, Kronenberg 61, D-5100
Aachen (DE)**
Inventeur: **Vanaschen, Luc, Lothringerweg 4, Eupen
(BE)**

(74) Mandataire: **Leconte, Jean-Gérard, Saint-Gobain
Recherche 39, Quai Lucien Lefranc, F-93304
Aubervilliers Cedex (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 169 770 B1

## Description

La présente invention concerne le bombage de plaques de matériaux thermoplastiques en particulier de verre défilant sur un convoyeur en position approximativement horizontale, par soulèvement desdites plaques à partir du convoyeur à l'aide de courants gazeux et application contre une forme de bombage disposée au-dessus.

Il est connu par la demande de brevet européen EP-A1-0 005 306 de bomber une plaque de verre en la soulevant pour l'appliquer contre une surface porteuse à l'aide d'une pluralité de jets d'air chaud indépendants, dirigés vers la face inférieure de la plaque de verre, engendrés par des orifices en forme de buses, ménagés dans la paroi supérieure d'un caisson rempli d'air comprimé, puis en larguant ladite plaque à partir de cette surface porteuse, sur un moule de bombage. En chutant la plaque se bombe alors par le seul effet de son propre poids; éventuellement un pressage entre la surface porteuse supérieure et le moule peut aussi être effectué. Les préambules des revendications 1 et 11 sont connus de cette document.

La surface porteuse est en outre percée d'orifices au travers desquels la plaque de verre est aspirée en même temps qu'elle est soulevée par les jets d'air s'exerçant sur sa face inférieure.

Le moule de bombage peut être constitué par un cadre annulaire encore appelé squelette destiné à porter sur la partie marginale à la périphérie de la plaque de verre à bomber.

Dans cette technique connue, le squelette de bombage exerce une action mécanique sur la périphérie de la plaque de verre, qui pour le bombage, se trouve portée à une haute température de façon à être déformable.

Dans le cas le plus favorable, cette action ne résulte que du propre poids de la plaque de verre, mais par contre, lorsque la plaque de verre est éjectée avec force en direction du squelette ou lorsqu'elle est pressée entre la surface porteuse et le squelette annulaire, l'action mécanique est beaucoup plus importante. Cette action mécanique sur la périphérie de la plaque de verre est néfaste; elle se caractérise par des défauts d'aspect de la surface du verre et des gauchissements susceptibles d'altérer les propriétés optiques.

De tels défauts d'aspect ou de géométrie dans la zone marginale périphérique des plaques de verre, sont particulièrement gênants lorsqu'il s'agit de vitrages d'automobiles pour lesquels d'une part la qualité optique est primordiale pour des questions de sécurité et pour lesquels d'autre part, du fait des techniques modernes de pose qui mettent lesdits vitrages directement en contact avec la carrosserie automobile, sans interposition d'une garniture et le plus souvent par simple collage, l'ensemble de la surface du vitrage, jusqu'à son arête même est visible de l'extérieur, rendant ainsi intolérable un défaut d'aspect même situé dans la zone marginale périphérique.

En outre, lorsque la plaque de verre est posée ou éjectée sur le squelette annulaire, on ne peut empêcher une déformation incontrôlée et indésirée sous l'effet de la seule pesanteur, des zones centrales de la plaque, qui ne sont pas soutenues par le squelette.

Il est également connu par le document de brevet US-4 386 952 d'utiliser des jets de gaz ascendants obliques pour appliquer contre une surface porteuse supérieure, une plaque de verre déjà prise en charge par ladite surface porteuse supérieure et en particulier ses bords, de façon à réaliser un prébombage de ladite plaque de verre, le bombage définitif n'étant obtenu ensuite que par largage de la plaque prébombée sur un cadre annulaire et son affaissement sur ledit cadre.

Cette technique est prévue pour permettre des bombages un peu plus profonds que ceux permis par la technique décrite dans le document de brevet EP-A1-0 005 306, mais elle n'en supprime pas les inconvénients évoqués précédemments.

L'invention vise à mettre au point un procédé de bombage de plaques de verre du type précité qui ne présente pas les défauts de l'art antérieur, c'est-à-dire qui permette de réaliser des plaques de verre bombées ayant un profil de bombage bien contrôlé, sans déformation indésirable, exemples en même temps des défauts et altérations produits par l'action mécanique du squelette de bombage.

L'invention vise également un dispositif approprié pour l'exécution du procédé.

Pour cela elle propose un procédé destiné au bombage de plaques de matière thermoplastique, en particulier de plaques de verre en position horizontale ou approximativement horizontale dans lequel les plaques sont acheminées sur un dispositif transporteur horizontal à travers un four de réchauffage, puis dans un poste de bombage disposé à la suite, dans lequel lesdites plaques sont soulevées du dispositif transporteur à l'aide d'un gaz chaud s'écoulant vers le haut, sont appliquées contre une surface courbe installée au-dessus du dispositif transporteur et ensuite sont déposées sur un dispositif porteur disposé au-dessous de la surface courbe contre laquelle les plaques ont été appliquées, dispositif grâce auquel les plaques sont envoyées dans un poste de refroidissement situé en aval, caractérisé en ce que c'est par leur application contre la surface courbe supérieure que les plaques acquièrent leur configuration selon laquelle on désire les bomber, ladite surface courbe supérieure possédant alors cette configuration et constituant ainsi une forme de bombage, en ce que le débit et la pression du gaz chaud sont réglés de façon que les plaques soient appliquées contre la forme de bombage pour y être bombées par la pression du gaz et en ce que ledit débit et ladite pression sont ensuite, après bombage des plaques, en vue de leur dépose sur le dispositif porteur, réduits à une valeur pour laquelle une fraction importante du poids propre des plaques de verre est encore équilibrée par la pression du gaz.

Dans ce procédé selon l'invention, le dispositif porteur inférieur ne sert plus de forme de bombage comme dans l'art antérieur, mais uniquement de moyen de transport des plaques bombées, pour les acheminer au poste de travail suivant, en principe poste de recuisson ou de trempe.

Le bombage d'une plaque de verre à sa configuration définitive se fait exclusivement par la pression du gaz qui applique ladite plaque de verre, sur la totalité de sa surface, contre la forme de bombage supérieure, dont la géométrie et le profil correspondent à ceux de la plaque bombée désirée, et dont les dimensions sont de préférence un peu plus petites que celles de la plaque.

En conséquence, lors du bombage, aucun outil ne peut exercer la moindre pression mécanique sur la plaque de verre. Même lorsque la plaque de verre bombée est reposée sur le dispositif porteur, celui-ci n'exerce aucune action néfaste sur le verre, étant donné que le verre reste en partie supporté par le gaz et que l'effort exercé sur le dispositif porteur n'est alors plus suffisant pour marquer ou déformer de quelque façon que ce soit.

Même au moment de la pose, la plaque de verre est déposée lentement et avec douceur sur le dispositif porteur et après la pose c'est une fraction du poids du verre importante de l'ordre de 80 % environ qui est équilibrée par le courant de gaz.

De ce fait, il ne peut apparaître de surbombage incontrôlé et indésirable dans les parties du verre situées entre les régions d'appui sur le dispositif porteur du fait de la prise en charge importante du poids du verre par le gaz.

En raison de cet effet fortement réduit du poids propre du verre, il est même possible d'utiliser comme dispositif porteur, non pas un cadre porteur adapté au profil de la plaque de verre, mais au lieu de cela, seulement un dispositif porteur plus simple, constitué par exemple de trois ergots porteurs, susceptibles de convenir pour des plaques de verre de profils et configurations divers.

Par ailleurs étant donné que selon l'invention, le bombage est effectué exclusivement par le courant de gaz, qui est chauffé, le réglage de la température n'est pas un paramètre aussi essentiel que dans les procédés mécaniques de bombage de l'art antérieur. Ceci constitue un avantage particulièrement important pour la fabrication de vitrages de sécurité qui sont trempés après bombage, par refroidissement brusque.

Non seulement le procédé conforme à l'invention peut être utilisé pour le bombage de plaques de verre prises individuellement, mais encore il est tout particulièrement approprié au bombage simultané de plusieurs plaques de verre disposées les unes au-dessus des autres, qui sont par exemple assemblées ensuite avec des intercalaires pour constituer un vitrage composite.

A l'opposé des procédés antérieurs classiques pour le bombage simultané de plusieurs plaques de verre disposées les unes au-dessus des autres, le procédé conforme à l'invention permet pour la première fois d'éviter des flèches indésirables, même lors du bombage de couples de plaques de verre. En outre, on peut de cette façon bomber même des couples de plaques de verre de configurations compliquées, qu'on ne pouvait jusqu'ici pas obtenir avec les procédés classiques.

Dans le procédé suivant l'invention, la pression effective du gaz chaud appliquée sous les plaques de verre, passe alternativement d'une valeur élevée de l'ordre d'environ 1000 à 4000 Pa (approximativement de 100 à 400 mm de colonne d'eau (C.E.)) à une valeur plus basse de l'ordre d'environ 50 à 300 Pa (approximativement de 5 à 30 mm (C.E.)) ces intervalles étant essentiellement fonction de l'épaisseur des plaques de verre, et de leur nombre.

Avantageusement, le courant de gaz chaud appliqué sous les plaques de verre est tel qu'il possède un champ d'écoulement uniforme, sans pic local de pression, et tel également qu'il ne possède pratiquement pas de composantes de pression statique qui conduiraient à des gradients de pression au-dessous du verre.

Eventuellement, par exemple dans le cas de flèches importantes pour des vitrages fortement bombés, il est également possible de créer un courant de gaz avec un champ d'écoulement non uniforme, c'est-à-dire avec un profil de pressions essentiellement dynamique qui au-dessous des zones marginales à cintrer fortement, présente une valeur plus élevée.

Avantageusement, avant le bombage, au début du poste de bombage et même dans la dernière section du four de réchauffage, il peut être prévu de diriger un courant de gaz porteur chaud vers la face inférieure des plaques de verre, courant qui équilibre une fraction du poids propre des plaques de verre. Ainsi, on peut éviter d'éventuelles déformations qui pourraient apparaître lors du transport des plaques de verre sur les rouleaux transporteurs. Cette mesure accessoire contribue également à l'obtention de plaques de verre bombées de bonne qualité.

L'invention propose également une installation destinée à la mise en oeuvre du procédé, ayant un four de réchauffage des plaques, un poste de bombage dans lequel les plaques à bomber sont acheminées sur un dispositif transporteur horizontal, une surface courbe installée au-dessus du dispositif transporteur, au moins un ventilateur disposé au-dessous du dispositif transporteur pour délivrer un courant de gaz chaud, un dispositif porteur des plaques bombées et un poste de refroidissement caractérisée en ce que la surface courbe possède la configuration pour bomber les plaques selon le profil désiré, en ce que le ventilateur est un ventilateur à flux transversal, et en ce que sont aussi prévus des moyens de réglage du débit et de la pression du gaz chaud au moins entre des valeurs pour lesquelles les plaques sont appliquées contre la forme de bombage pour y être bombées et des valeurs réduites pour lesquelles les plaques redescendent en ayant cependant une fraction importante de leur poids équilibrée par la pression du gaz.

L'invention sera maintenant décrite plus en détail en référence aux figures jointes qui réprésentent:

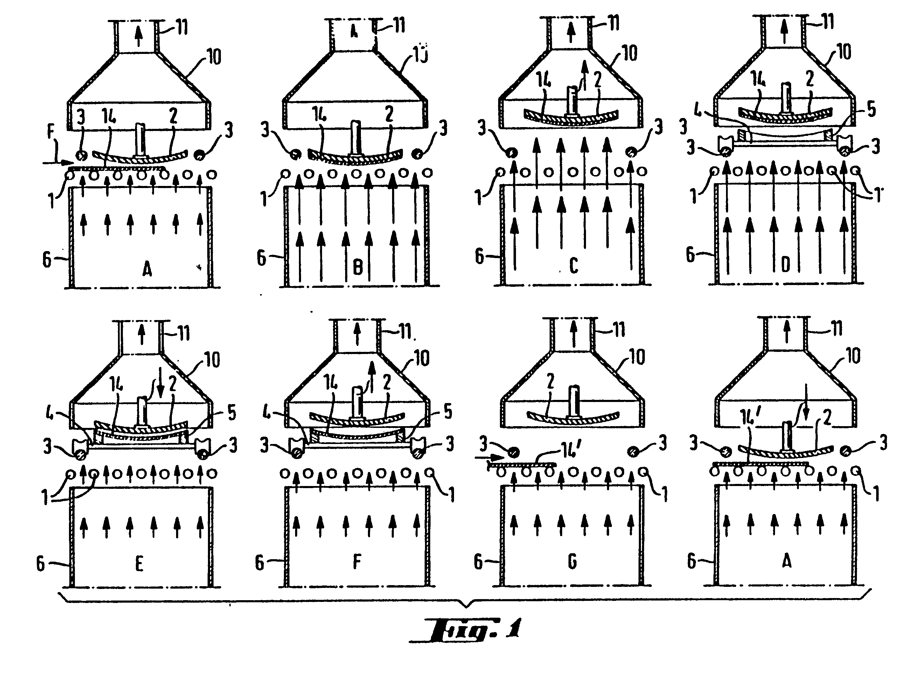

. figure 1 : un schéma de déroulement du processus de bombage,

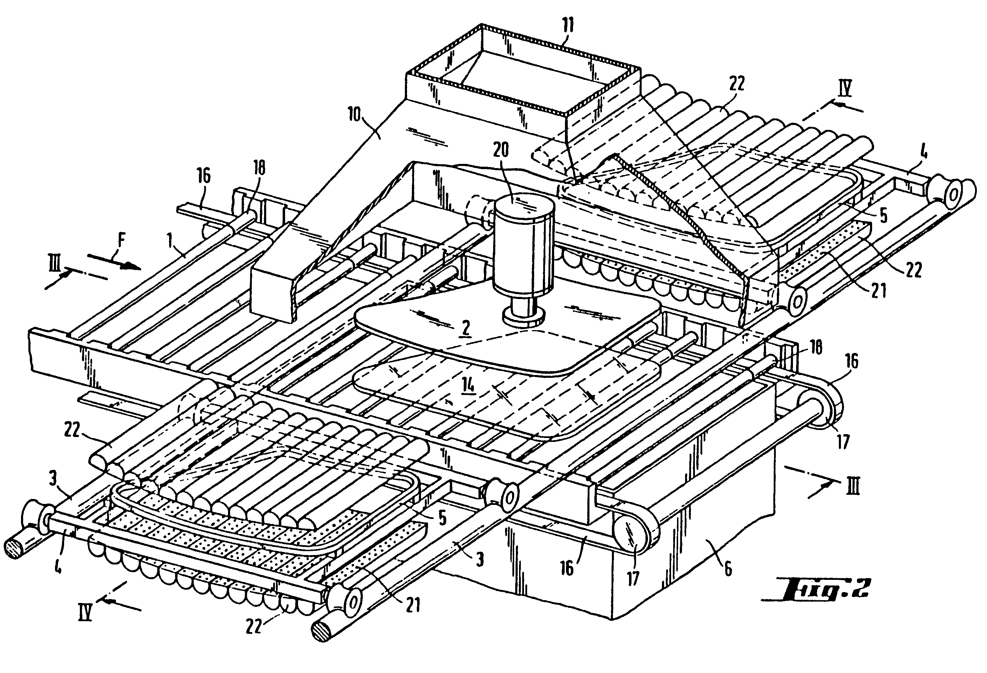

. figure 2 : un dispositif destiné au bombage d'une plaque de verre suivant le procédé de l'invention, puis à la trempe de ladite plaque de verre,

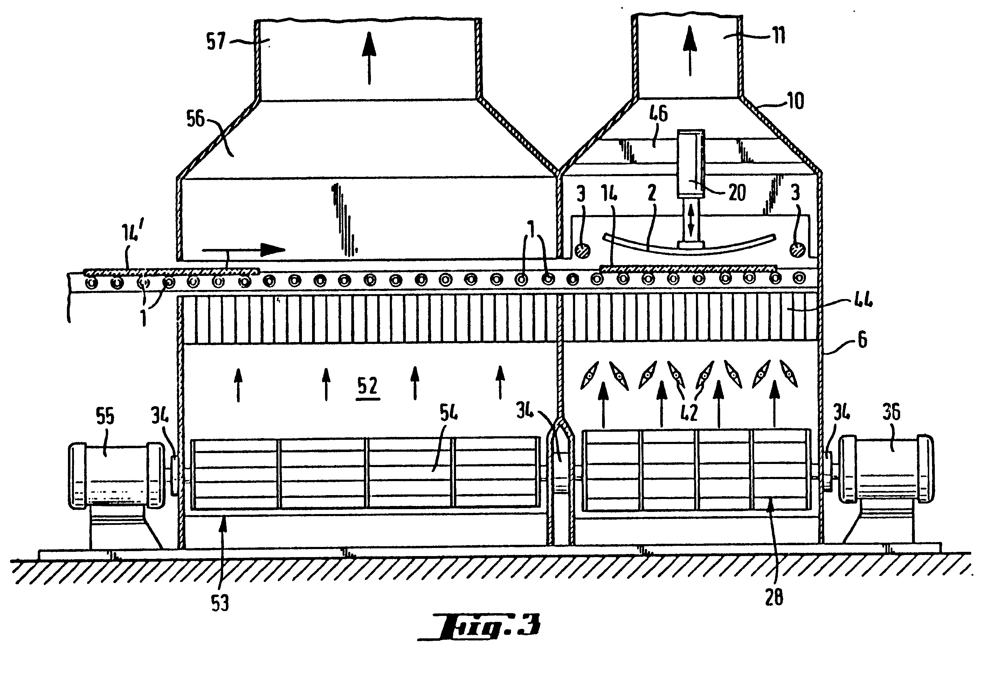

. figure 3 : une coupe du dispositif de la figure 2 le long de la ligne III-III,

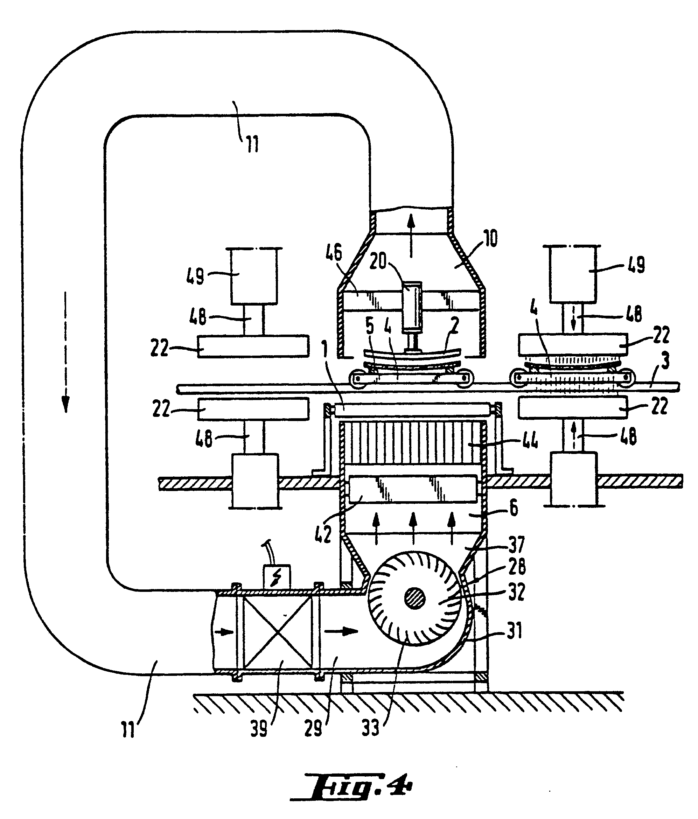

. figure 4 : une coupe verticale du dispositif de la figure 2 le long de la ligne IV-IV,

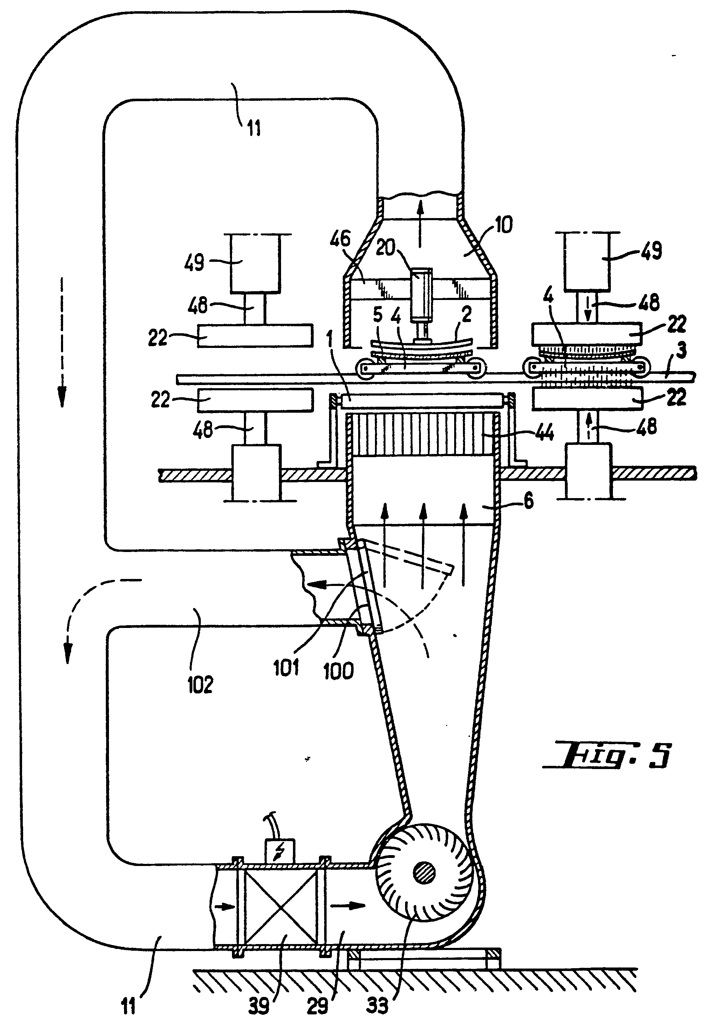

. figure 5 : une première variante du dispositif suivant l'invention équipé d'un by-pass,

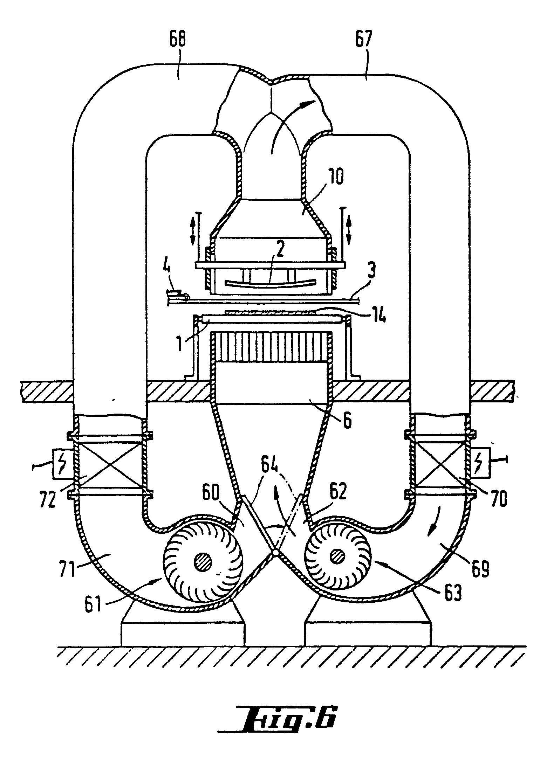

. figure 6 : une variante de dispositif de bombage suivant l'invention avec deux souffleries séparées en vue de créer un champ de pression non uniforme sous le verre,

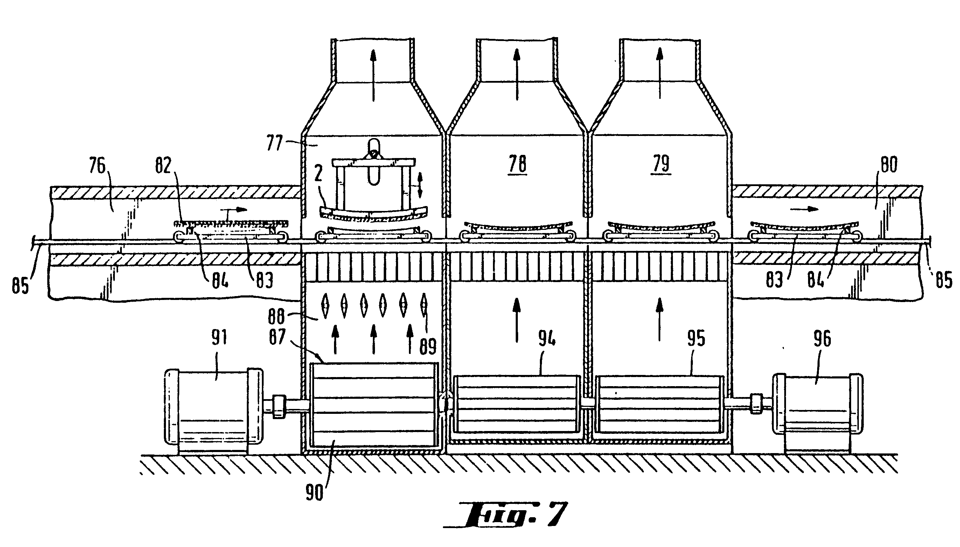

. figure 7 : un four de bombage suivant l'invention en coupe longitudinale verticale, destiné au bombage par paires de plaques de verre.

Sur la figure 1 sont représentées en coupe verticale à travers un poste de bombage la succession des différentes étapes d'un bombage suivant l'invention.

Comme parties constitutives essentielles, le poste de bombage comporte un transporteur horizontal à rouleaux 1, une forme de bombage 2 disposée au centre du poste de bombage et au-dessus du transporteur à rouleaux 1, montée sur appuis pour lui permettre de monter et de descendre, des rails 3 de part et d'autre de la forme de bombage 2, sur lesquels peut se déplacer un chariot 4 équipé d'un dispositif transporteur ayant la forme d'un cadre porteur 5, un canal d'écoulement de gaz 6 au-dessous du transporteur à rouleaux 1 dans lequel le courant de gaz chaud et en particulier d'air est dirigé verticalement vers le haut entre les rouleaux du transporteur à rouleaux 1, ainsi qu'une hotte 10 fermant le haut du poste de bombage pour capter le gaz chaud, reliée à une canalisation tubulaire 11 qui autorise le recyclage de ce gaz chaud dans le canal 6.

Les organes de production du courant de gaz chaud, par exemple d'air décrits plus en détails ci-dessous, doivent permettre de créer un courant de gaz homogène avec un profil de pression uniforme, sans pics de pression ou avec un profil de pression ne comportant une pression accrue qu'en des emplacements sélectionnés.

La plaque de verre 14, chauffée à la température de bombage, est envoyée par les rouleaux transporteurs 1, entraînés par moteur, dans la direction de la flèche F, depuis un four de réchauffage, non représenté, jusque dans le poste de bombage.

Cette situation, dans laquelle la plaque de verre n'a pas encore atteint sa position définitive dans le poste de bombage, est représentée dans la vue A de la figure 1. A cet instant du processus, la forme de bombage 2 se trouve dans une position basse, c'est à dire à une faible distance seulement au-dessus de la plaque de verre 14. Il est dirigé depuis le bas, vers la plaque de verre 14, un courant d'air chaud à une température de 650° C environ et avec une vitesse d'écoulement telle que, dans le cas d'une plaque de verre épaisse de 4 mm, il règne immédiatement au-dessous de ladite plaque 14, une pression de refoulement, c'est à dire une pression dynamique, de 100 Pa environ (approximativement 10 mm C.E.). Avec ce courant de gaz, le poids propre de la plaque de verre 14 est compensé dans une mesure telle que la plaque de verre ne se déforme pas par prise de flèche entre les rouleaux transporteurs 1, mais que d'autre part la fraction du poids propre supportée par les rouleaux transporteurs 1 suffise au transport de la plaque. Le débit et la pression de ce courant d'air chaud sont réglés en fonction de l'épaisseur de la plaque de verre 14.

Dès que la plaque de verre 14 a atteint le poste de bombage et est arrivée en-dessous de la forme de bombage 2, le débit et par conséquent la pression du courant de gaz chaud sont rapidement augmentés et cela jusqu'à une valeur qui suffise pour décoller la plaque de verre 14 des rouleaux transporteurs 1 et pour l'appliquer entièrement contre la surface de la forme de bombage 2. Cette situation est représentée sur la vue 8 de la figure 1.

Comme montré sur la figure il a été choisi une forme de bombage 2 qui possède presque exactement les dimensions du vitrage 14. De préférence, on peut aussi employer des formes de bombage 2 ayant des dimensions légèrement plus petites, par exemple 5 à 10 mm de moins que le vitrage sur tout le pourtour de sa forme.

Dès que la plaque de verre 14 est appliquée sur la forme de bombage 2, celle-ci est amenée en position extrême supérieure (vue C - figure 1). Pendant ce temps le courant de gaz ascendant reste inchangé de façon que la plaque de verre 14 reste plaquée contre la forme 2 pendant ce déplacement vers le haut. Aussitôt (vue D - figure 1) le chariot 4 muni du cadre porteur 5 est amené au-dessous de la forme de bombage 2 et positionné au-dessous de la plaque de verre 14 en glissant sur les rails 3.

Ensuite (vue E - figure 1) tandis que la pression élevée du gaz est maintenue, la forme de bombage 2 est descendue jusqu'à ce que la plaque de verre 14 se trouve à une très faible distance, au-dessus du cadre porteur 5, par exemple quelques millimètres. Dès que cette position est atteinte, la pression du courant de gaz est réduite à la valeur basse, de 100 Pa environ (approximativement 10 mm C.E.). De ce fait, la plaque de verre 14 vient se poser lentement et avec douceur sur le cadre porteur 5 (vue F). La faible pression du gaz, de 100 Pa environ (approximativement de 10 mm C.E.) est maintenue; elle interdit une flèche indésirable de la plaque de verre à l'intérieur du cadre porteur 5. La forme de bombage 2 est ensuite ramenée à sa position extrême supérieure.

Quand la forme de bombage 2 a atteint sa position extrême supérieure, le chariot 4, avec la plaque de verre 14 maintenant bombée portée par le cadre porteur 5, est conduit, sur les rails 3, à l'extérieur du poste de bombage. Le poste de bombage est ainsi libéré pour le processus de bombage de la plaque de verre suivante 14', qui entre pendant ce temps dans la poste de bombage, sur les rouleaux transporteurs 1 (vue G). Tandis que la plaque de verre 14' arrive à sa position de bombage, la forme de bombage 2 est descendue à sa position extrême inférieure, dans laquelle sa surface de bombage se trouve juste au-dessus de la plaque de verre 14'. Tout comme dans les étapes du processus illustrées sur les vues F et G, la pression du gaz à ce moment là est maintenue à sa valeur basse, afin d'empêcher des déformations indésirables de la plaque de verre 14' notamment, par prise de flèche entre les rouleaux transporteurs 1. On se retrouve à nouveau à l'origine du cycle de cintrage, illustré par la vue A.

Ce procédé de bombage selon l'invention est parfaitement adapté à la fabrication de vitrages pour automobiles, ces vitrages après bombage étant éventuellement trempés.

Une installation pour le bombage et la trempe de plaques de verre est décrite en détail en relation avec les figures 2, 3 et 4.

Les rouleaux transporteurs 1 constituent un dispositif transporteur horizontal à l'intérieur d'un four de réchauffage à défilement continu du type canal qui, cependant, n'est pas représenté comme tel, pour des raisons de meilleure lisibilité. L'entraînement de ces rouleaux transporteurs 1 se fait par accouplement à friction, avec une bande métallique sans fin flexible 16 entraînée, et tendue sur des poulies 17. Sur cette bande métallique reposent, libre de rotation, les extrémités 18 des rouleaux transporteurs 1.

Dans le poste de bombage, qui fait suite au four de réchauffage, au-dessus du plan de transport pour les plaques de verre 14, la forme de bombage 2 à surface pleine possède la liberté de mouvement dans la direction verticale et elle est amenée dans les différentes positions à l'aide du vérin réglable 20. Transversalement à la direction de transport F, suivant laquelle les plaques de verre 14 pénètrent dans le poste de bombage, il est disposé dans ledit poste de bombage, de part et d'autre de la forme de bombage 2, des rails 3, sur lesquels glissent deux chariots 4, qui portent chacun un cadre porteur 5. Ces chariots roulent chacun à leur tour dans le poste de bombage, où ils prennent chaque fois en charge une plaque de verre 14 déjà bombée et vont ensuite dans l'un des deux postes de trempe, disposés sur les côtés du poste de bombage; postes dans lesquels les plaques de verre sont trempées. Dans chacun des deux postes de trempe, au-dessous et au-dessus du chariot 4, sont installés des dispositifs de soufflage 22, par exemple constitués par des rampes percées d'orifices de soufflage 21, grâce auxquelles les plaques de verre 14 sont soumises à la façon usuelle à un refroidissement brutal.

Dans le poste de bombage, au-dessous des rouleaux transporteurs 1, est disposé un canal d'écoulement 6, de section rectangulaire, par lequel le courant de gaz chaud avec un champ d'écoulement homogène est dirigé verticalement vers le haut. Le courant de gaz s'écoule autour de la forme de bombage 2, il est collecté par la hotte en forme de toit 10 et remis en circuit dans le canal 6 par la canalisation tubulaire 11.

Les dispositifs destinés à créer et à réguler le courant de gaz sont représentés en détails sur les figures 3 et 4. Etant donné que, pour décoller la plaque de verre 14 des rouleaux transporteurs 1 et pour exécuter le bombage, il faut créer un courant de gaz chaud exerçant sur la plaque de verre 14 une pression dynamique de l'ordre de 1000 à 2500 Pa (approximativement 100 à 250 mm C.E.) et cela uniformément sur toute sa surface, il faut réaliser, à l'aide de ventilateurs appropriés, un grand débit, avec la pression indispensable. Le courant de gaz, par exemple d'air, doit en outre avoir, à l'intérieur de l'enceinte, une température de 650°C environ. Il est aussi essentiel que le courant de gaz, à l'intérieur de l'enceinte de bombage, soit aussi uniforme que possible, c'est à dire sans turbulences perturbatrices qui pourraient avoir un effet nuisble sur le processus de bombage.

Egalement, les dispositifs prévus pour la création du courant de gaz chaud doivent permettre une régulation rapide de la pression et du débit, afin qu'on puisse passer rapidement d'une basse pression à une pression élevée, et vice versa.

Pour créer le courant d'air chaud homogène nécessaire, il est recommandé d'utiliser par exemple un dispositif tel que décrit dans la demande de brevet européen EP-A1-0 106 758. Dans ce dispositif précédemment décrit, le gaz chaud est envoyé radialement par un ventilateur dans une enceinte dont la paroi de fermeture supérieure présente un grand nombre d'orifices de sortie du gaz, de dimensions déterminées et suivant une disposition également déterminée; la distance entre la paroi de fermeture munie des orifices de sortie du gaz, et la plaque de verre étant telle que les jets de gaz se rejoignent et se recouvrent pour former un champ d'écoulement homogène, au niveau de la plaque de verre. En outre la surface d'évacuation pour le gaz, délimitée par les arêtes de la plaque de verre et par la paroi de fermeture, est au moins aussi grande, et de préférence plus grande, que la somme des sections des orifices de sortie du gaz dans la paroi de fermeture de l'enceinte, sur une surface égale à cette de la plaque de verre.

On peut également employer des ventilateurs à flux transversat, qui sont particulièrement intéressants dans l'application envisagée. Ces ventilateurs non seulement ont des canaux ayant des sections rectangulaires, particulièrement bien adaptées à notre problème, et des conditions d'écoulement favorables, mais encore ils peuvent s'utiliser à des températures relativement élevées car les patiers porteurs de la turbine sont disposés à l'extérieur du courant de gaz chaud. En outre, avec de tels ventilateurs à flux transversal, les possibitités de régulation sont meilleures et l'encombrement est réduit.

Sur les réalisations des figures 3 et 4, on a donc prévu un ventilateur à flux transversal 28 pour créer le courant d'air chaud. Un canal d'alimentation 29 du ventilateur 28, de section rectangulaire, est raccordé à la canalisation tubulaire 12, issue de la hotte d'évacuation 10 au-dessus du poste de bombage. Une turbine 32, avec des ailettes 33, tourne dans un carter 31, tandis que ses paliers 34 se trouvent à l'extérieur du carter 31. L'entraînement de la turbine 32 s'effectue par un moteur 36. Le canal de sortie 37 présentant à peu près la section du courant d'air chaud nécessaire dans la zone de bombage, est situé au-dessus du ventilateur 28, au-dessous de la zone de bombage et il débouche dans le canal d'écoulement 6, grâce auquel le courant de gaz est dirigé vers les plaques de verre.

Entre le canal d' alimentation 29 et la canalisation tubulaire 11, il est disposé une section de canal 39, dans laquelle des dispositifs électriques de chauffage sont installés en vue de chauffer le cou rant d'air à la température nécessaire, de 650°C environ.

Dans le canal d'écoulement 6 sont disposés des volets mobiles 42, grâce auxquels on peut accroître ou réduire le débit. Au-dessus de ces volets 42 sont disposés des déflecteurs verticaux 44, qui servent à régulariser l'écoulement du gaz.

Selon une variante illustrée par la figure 5, une ouverture 100 est pratiquée dans la paroi latérale du canal 37, ouverture à obturation réglable à volonté par un volet mobile 101, permettant ainsi de diriger dans le canal d'écoulement 6, soit la totalité du courant d'air pour disposer de la pression de soufflage maximale, soit seulement une partie pour disposer d'une pression réduite. La partie prélevée par l'ouverture 100 est avantageusement renvoyée dans la canalisation tubulaire 11 grâce à une canalisation 102. Ce système de "by-pass" permet de varier simplement la pression et le débit du courant d'air envoyé sous les plaques de verre.

Sur les figures 3 et 4, on reconnaît en outre les rouleaux transporteurs 1, les rails 3 sur lesquels peut se déplacer le chariot 4 avec le cadre porteur 5, ainsi que la forme de bombage 2, qui est montée de façon mobile en direction verticale à l'aide du vérin 20 ou d'un système mécanique de levage équivalent. Le vérin 20 est monté, à l'aide des entretoises 46, à l'intérieur de la hotte d'évacuation 10. De part et d'autre du poste de bombage, on peut encore reconnaître un poste de trempe, qui comprend les dispositifs de soufflage 22, installés audessus et au-dessous du plan de transport pour les plaques de verre déjà bombées.

Les dispositifs de soufflage 22 sont raccordés, au moyen de tuyaux souples appropriés 48, à des caissons 49 alimentés en air ou gaz de trempe, de préférence à la température ambiante.

Sur la figure 3, il est également représenté la dernière section du four de réchauffage des plaques de verre avant leur entrée dans le poste de bombage. Dans cette dernière section, les plaques de verre atteignent déjà la température nécessaire au bombage; existe alors le risque qu'elles se déforment, sous l'effet de leur poids propre, lors du transport sur les rouleaux transporteurs 1. Afin d'exclure ce risque, dans le four de réchauffage même, en particulier dans sa dernière section, on dirige un courant de gaz chaud, du bas vers le haut, de façon à prendre en charge par ce moyen, une partie du poids des plaques de verre et à délester partiellement les rouleaux transporteurs. Comme dans le poste de bombage, il est prévu ici aussi, en-dessous du convoyeur à rouleaux 1, un canal d'écoulement, dans lequel est introduit un courant de gaz chaud, grâce à un ventilateur transversal 53 dont la turbine 54 est entraînée par un moteur 55. Ce courant à écoulement homogène est dirigé vers les plaques de verre.

Au-dessus du convoyeur à rouleaux 1, le courant de gaz est collecté par une hotte d'évacuation 56, et il est recyclé grâce à une canalisation tubulaire 57. A l'intérieur de la canalisation tubulaire recyclant le gaz chaud, et de préférence immédiatement avant les orifices d'aspiration du ventilateur à flux transversal 53, il est disposé un bloc chauffant, non représenté sur la figure, grâce auquel le gaz est réchauffé à la température nécessaire, de 650°C environ. Le débit et la pression du gaz, créés par le ventilateur à flux transversal 53, sont déterminés et réglés en fonction de l'épaisseur des plaques de verre pour qu'il règne, au-dessous desdites plaques de verre, une pression dynamique comprise entre 50 et 300 Pa 5 et 30 mm d'eau). Ainsi seulement 10 à 20 % environ du poids propre des plaques de verre est supporté par les rouleaux transporteurs 1.

Dans le mode de réalisation représenté sur la figure 6, concernant une variante d'installation propre à la mise en oeuvre du procédé selon l'invention, le passage du débit élévé au débit faible du courant de gaz et vice versa, s'effectue de façon particulièrement rationnelle et efficace à l'aide de deux ventilateurs 61 et 63 à flux transversal de puissances différentes, qui servent alternativement à créer le courant de gaz porteur nécessaire. A cet effet, sur le canal d'écoulement 6, sont raccordés le canal de sortie 60 d'un des ventilateurs à flux transversal celui référencé par exemple 61, de puissance relativement élevée, ainsi que le canal de sortie 62 de l'autre ventilateur à flux transversal par exemple 63, de puissance relativement faible. Les deux canaux de sortie 60 et 62 sont disposés l'un par rapport à l'autre de façon qu'avec un volet 64, on puisse au choix ouvrir l'un des canaux de sortie 60 ou 62 et alors en même temps fermer l'autre 62 ou 60. A l'extrémité de la canalisation tubulaire 67, respectivement 68 est prévu un bloc chauffant 70, respectivement 72, grâce auquel le courant de gaz est chauffé à la température nécessaire de 650°C environ. Le gaz ainsi chauffé est acheminé jusqu'au ventilateur 61, respectivement 63, par le conduit 71, respectivement 69. Les deux ventilateurs 61, 63 tournent chacun à une vitesse qui correspond aux débits et aux pressions hauts et bas, qui sont nécessaires aux différentes étapes du procédé.

Pour appliquer la plaque de verre 14 sur la forme de bombage 2, et l'y maintenir, le volet 64 est mis dans la position qui autorise la fourniture du gaz avec le plus fort débit et la plus forte pression, ainsi que son recyclage. Au contraire pour assurer la pose lente de la plaque de verre 14 après bombage sur le chariot 4, le volet 64 est mis dans l'autre position extrême permettant la fourniture et le recyclage du gaz avec les plus faibles débits et pressions.

Sur la figure 6 le ventilateur 61 est celui qui est censé avoir le plus fort débit; en conséquence pour appliquer la plaque de verre 14 contre la forme de bombage 2, le volet 64 prend la position représentée en pointillés.

Etant donné que le procédé selon l'invention, adapté à la fabrication de vitrages bombés, trempés ou non, est également particulièrement bien adapté à la fabrication de vitrages composites comprenant deux ou plusieurs plaques de verre associées, bombées, trempées ou non, nous décrivons à titre d'exemple en relation avec la figure 7, une installation servant au bombage simultané d'une paire de plaques de verre.

Cette installation de bombage comporte un four de réchauffage des plaques de verre jusqu'à leur température de bombage, un poste de bombage 77, dans lequel les plaques de verre sont bombées à la configuration désirée, deux postes de refroidissement 78 et 79, pour le refroidissement lent par paliers des plaques de verre et une enceinte de refroidissement 80, dans laquelle les plaques de verre sont finalement refroidies de façon accélérée jusqu'à la température usuelle de traitement ultérieur. Des couples 82 de plaques de verre portés sur des cadres annulaires 84 disposés sur des chariots 83 mobiles, sont envoyés à une cadence déterminée sur des rails 85, à travers l'installation.

Au-dessous du poste de bombage 77, il est disposé un ventilateur à flux transversal 87, créant un courant de gaz qui est dirigé, par un canal d'écoulement 88, vers les plaques de verre portées par le chariot 83. A l'aide de volets de réglage 89 ou en réglant le régime de la turbine 90 du ventilateur 87 au moyen d'une commande ad hoc de son moteur 91, la vitesse d'écoulement du gaz dans le canal d'écoulement 88 peut être portée à une valeur élevée, grâce à laquelle le couple 82 de plaques de verre est pressé contre la forme de bombage 2. Grâce à la réduction ultérieure de la vitesse d'écoulement, la paire 82 de plaques une fois bombée est à nouveau descendue et lentement déposée sur le cadre annulaire de transport 84.

Les chariots 83 sont ensuite envoyés dans les deux postes de refroidissement 78 et 79, dans lesquels est également maintenu un courant de gaz porteur. Pour créer les courant de gaz porteur dans ces deux postes de refroidissement 78, 79, on utilise à nouveau deux ventilateurs à flux transversal 94, 95, qui sont entraînés par un moteur commun d'entrainement 96. A l'aide de ces ventilateurs à flux transversal 94, 95, il est créé, dans chacun des deux postes de refroidissement, un courant de gaz dont la vitesse d'écoulement, ou le débit, est réglé de façon telle que 80 à 90 % environ du poids propre des plaques de verre 82 soit supporté par le courant de gaz. De cette façon, on empêche que les plaques de verre déjà bombées ne prennent de la flèche dans leur zone centrale non supportée par le cadre 84 annulaire, sous l'effet de leur propre poids.

Tandis que le courant de gaz dans le poste de bombage 77 présente une température élevée, de 650°C environ, la température du courant de gaz dans les postes de refroidissement 78 et 79 est réduite progressivement, par exemple à 600°C dans l'enceinte 78 et à 550°C dans l'enceinte 79. Au-dessous de cette température de 550°C environ, il n'apparaît plus aucune déformation des plaques de verre, si bien qu'une poursuite du soutien des plaques de verre par le gaz n'est plus nécessaire. Les plaques de verre peuvent continuer à être refroidies dans une enceinte de refroidissement classique 80.

On peut grâce à cette installation bomber des plaques de verre de dimensions diverses.

Pour réduire les consommations de gaz chaud, lorsqu'on veut bomber des plaques de verre de petites dimensions, on peut prévoir dans le canal d'écoulement, en-dessous du dispositif de transport, un ou plusieurs diaphragmes disposés horizontalement.

La description qui précède a été faite en relation avec le traitement de plaques de verre, mais des plaques en un autre matériau thermoplastique par exemple polycarbonate peuvent bien entendu être également traitées, les pressions et températures précédemment indiquées étant bien sur adaptées en fonction dudit matériau.

De la même façon les dispositifs de transport ont été décrits comme étant horizontaux, mais une légère variation par rapport à cette orientation ne modifierait pas l'invention.

## Revendications

1. Procédé destiné au bombage de plaques de matière thermoplastique, en particulier de plaques de verre (14) en position horizontale ou approximativement horizontale dans lequel les plaques (14) sont acheminées sur un dispositif transporteur horizontal (1) à travers un four de réchauffage, puis dans un poste de bombage disposé à la suite, dans lequel lesdites plaques (14) sont soulevées du dispositif transporteur (1) à l'aide d'un gaz chaud s'écoulant vers le haut, sont appliquées contre une surface courbe (2) installée au-dessus du dispositif transporteur et ensuite sont déposées sur un dispositif porteur (5) disposé au-dessous de la surface courbe contre laquelle les plaques (14) ont été appliquées, dispositif grâce auquel les plaques sont envoyées dans un poste de refroidissement situé en aval, caractérisé en ce que c'est par leur application contre la surface courbe supérieure (2) que les plaques (14) acquièrent leur configuration selon laquelle on désire les bomber, ladite surface courbe supérieure (2) possédant alors cette configuration et constituant ainsi une forme de bombage, en ce que le débit et la pression du gaz chaud sont réglés de façon que les plaques de verre (14) soient appliquées contre la forme de bombage (2) pour y être bombées par la pression du gaz et en ce que ledit débit et ladite pression sont ensuite, après bombage des plaques (14), en vue de leur dépose sur le dispositif porteur (5), réduits à une valeur pour laquelle une fraction importante du poids propre des plaques est encore équilibrée par la pression du gaz.

2. Procédé selon la revendication 1, caractérisé en ce que le débit et la pression du gaz chaud sont réglés de telle façon que la pression dynamique agissant au-dessous des plaques (14), durant l'opération de bombage, soit de l'ordre de 1000 à 4000 Pa (100 à 400 mm d'eau) et, en dehors de l'opération de bombage, de l'ordre de 50 à 300 Pa (5 à 30 mm d'eau).

3. Procédé selon les revendications 1 et 2, caractérisé en ce qu'on fait agir, sur les plaques (14) un courant de gaz chaud avec un profil d'écoulement uniforme, sans pics de pression ni turbulences perturbatrices.

4. Procédé selon les revendications 1 et 2, caractérisé en ce qu'on fait agir, sur les plaques (14) un courant de gaz chaud avec un profil d'écoulement présentant une pression plus élevée sur les zones marginales des plaques de verre (14), cependant sans pics de pression marqués ni turbulences perturbatrices

5. Procédé suivant les revendications 1 à 4, caractérisé en ce que le courant de gaz chaud est entraîné en circuit fermé.

6. Procédé selon les revendications 1 à 5, caractérisé en ce que les plaques (14) sont bombées à l'aide d'un courant de gaz chaud dont la section correspond à peu près à la surface des plaques à bomber.

7. Procédé selon l'une des revendications 1 à 6, caractérisé en ce que, afin de créer un courant de gaz chaud avec débit et pression alternativement hauts et bas, on utilise un ventilateur (63) délivrant un courant gazeux sous faible pression et un ventilateur (61) délivrant un courant gazeux sous haute pression, les deux ventilateurs (63, 61) étant entraînés simultanément et leurs courants gazeux étant alternativement dirigés vers les plaques grâce à un volet de réglage (64).

8. Procédé selon l'une des revendications 1 à 7, caractérisé en ce que le dispositif porteur sur lequel sont déposées les plaques après bombage est introduit dans le poste de bombage après l'opération de bombage elle-même.

9. Procédé selon une ou plusieurs des revendications 1 à 7, caractérisé en ce que les plaques sont déposées sur un dispositif porteur annulaire (5) en forme de cadre, pour être envoyées à travers le four de réchauffage, dans le poste de bombage et, après le bombage, sont redéposées à nouveau sur ce dispositif porteur en forme de cadre.

10. Procédé selon une ou plusieurs des revendications 1 à 9, caractérisé en ce que les plaques, dans la dernière section du four de réchauffage, avant l'arrivée dans le poste de bombage, sont en partie soutenues par un courant de gaz chaud dirigé de bas en haut, en vue d'éviter des déformations provoquées par leur poids propre.

11. Installation destinée à la mise en oeuvre du procédé selon les revendications précédentes, ayant un four de réchauffage des plaques, un poste de bombage dans lequel les plaques à bomber sont acheminées sur un dispositif transporteur horizontal (1), une surface courbe (2) installée au-dessus du dispositif transporteur (1), au moins un ventilateur (28) disposé au-dessous du dispositif transporteur pour délivrer un courant de gaz chaud, un dispositif porteur (5) des plaques bombées et un poste de refroidissement caractérisée en ce que la surface courbe possède la configuration pour bomber les plaques selon le profil désiré, en ce que le ventilateur (28) est un ventilateur à flux transversal, et en ce que sont aussi prévus des moyens de réglage du débit et de la pression du gaz chaud au moins entre des valeurs pour lesquelles les plaques sont appliquées contre la forme de bombage pour y être bombées et des valeurs réduites pour lesquelles les plaques redescendent en ayant cependant une fraction importante de leur poids équilibrée par la pression du gaz.

12. Dispositif selon la revendication 11, caractérisé en ce que, au-dessus du poste de bombage, il est prévu pour le courant de gaz, une hotte d'évacuation (10) qui est raccordée par une canalisation tubulaire (11) avec le canal d'alimentation (29) du ventilateur à flux transversal (28), afin de constituer un système en circuit ferme.

13. Dispositif selon l'une des revendications 11 ou 12, caractérisé en ce que pour créer un courant de gaz à pression alternativement haute et basse, deux ventilateurs à flux transversal (61, 63) sont disposés côte à côte, l'un délivrant un courant à haute pression, l'autre un courant à basse pression, les canaux d'écoulement (60, 62) de chaque ventilateur débouchant dans un canal d'écoulement (6) commun et un vol et de commande (64) mettant alternativement en communication l'un ou l'autre des canaux individuels d'écoulement avec le canal commun.

14. Dispositif selon l'une des revendications 11 et 12, caractérisé en ce que pour créer un courant de gaz à pression alternativement haute et basse, une ouverture (100) à obturation réglable par un volet (101) est prévue dans le canal du ventilateur (28).

15. Dispositif selon une ou plusieurs des revendications 11 à 14, caractérisé en ce que le débit et la pression du courant de gaz délivré par un ventilateur (28) à flux transversal sont réglables par réglage du régime du moteur d'entraînement dudit ventilateur.

16. Dispositif selon l'une des revendications 11 à 15, caractérisé en ce que des moyens de chauffage sont prévus sur le système des conduites des ventilateurs.

17. Dispositif selon l'une des revendications 11 à 16, caractérisé en ce qu'il est prévu des déflecteurs (44) dans le canal d'écoulement au-dessous du dispositif transporteur (1).

18. Dispositif selon l'une des revendications 11 à 17, caractérisé en ce qu'il est prévu des diaphragmes disposés horizontalement dans le canal d'écoulement (6).

19. Dispositif selon une ou plusieurs des revendications 11 à 18, caractérisé en ce que les dimensions de la forme de bombage (2) correspondent sensiblement aux dimensions des plaques (14).

20. Dispositif selon une ou plusieurs des revendications 11 à 18, caractérisé en ce que la forme de bombage (2) est de dimensions plus petites que celles des plaques (14) à bomber, plus petite de l'ordre de 5 à 10 mm.

21. Dispositif selon une ou plusieurs des revendications 11 à 20, caractérisé en ce qu'on peut faire monter et descendre la forme de bombage (2) installée au-dessus du dispositif transporteur (1).

22. Application du procédé selon une ou plusieurs des revendications 1 à 10 pour le bombage simultané de plusieurs plaques de verre (14) disposées les unes au-dessus des autres.

## Claims

1. Process intended for the bending of plates of thermoplastic material, in particular of plates of glass (14) in a horizontal or approximately horizontal position, in which the plates (14) are conveyed on a horizontal conveyor device (1) through a reheating furnace, then into a bending station disposed behind, in which said plates (14) are raised from the conveyor device (1) by means of a hot gas flowing upwards, are applied onto a curved surface (2) installed above the conveyor device and are then deposited onto a carrier device (5) disposed beneath the curved surface against which the plates (14) have been applied, by means of which device the plates are despatched into a cooling station disposed downstream, characterized in that it is by their application against the upper curved surface (2) that the plates (14) acquire their configuration to which it is desired to bend them, said upper curved surface (2) therefore possessing this con figuration and thus constituting a bending mould, in that the flow rate and pressure of the hot gas are regulated in such a manner that the plates of glass (14) are applied against the bending mould (2) to be bent there by the pressure of the gas and in that said flow rate and said pressure are subsequently, after bending of the plates (14), reduced for the purpose of depositing the plates onto the carrier device (5) to a value for which a large fraction of the self-weight of the plates is still balanced by the pressure of the gas.

2. Process according to claim 1, characterized in that the flow rate and the pressure of the hot gas are regulated in such a manner that the dynamic pressure acting beneath the plates (14) during the bending operation is of the order of 1,000 to 4,000 Pa (100 to 400 mm water gauge) and, outside the bending operation, of the order of 50 to 300 Pa (5 to 30 mm water gauge).

3. Process according to claims 1 and 2, characterized in that a flow of hot gas with a uniform flow profile, without pressure peaks or perturbing turbulences, is caused to act on the plates (14).

4. Process according to claims 1 and 2, characterized in that a flow of hot gas with a flow profile possessing a higher pressure on the marginal zones of the plates of glass (14), but without notable pressure peaks or perturbing turbulences, is caused to act on the plates (14).

5. Process according to claims 1 to 4, characterized in that the flow of hot gas is entrained in closed circuit.

6. Process according to claims 1 to 5, characterized in that the plates (14) are bent by means of a flow of hot gas, the cross- section of which corresponds approximately to the surface of the plates to be bent.

7. Process according to one of claims 1 to 6, characterized in that, in order to create a flow of hot gas with alternatively high and low flow rate and pressure, there are used a fan (63) delivering a gas flow at low pressure and a fan (61) delivering a gas flow at high pressure, the two fans (63, 61) being simultaneously driven and their gas flows being alternatively directed towards the plates by means of a regulating damper (64).

8. Process according to one of claims 1 to 7, characterized in that the carrier device on which the plates are deposited after bending is introduced into the bending station after the operation of bending itself.

9. Process according to one or more of claims 1 to 7, characterized in that the plates are deposited on an annular carrier device (5) in the form of a frame, to be despatched through the reheating furnace, into the bending station and, after bending, are deposited again on this carrier device having the form of a frame.

10. Process according to one or more of claims 1 to 9, characterized in that the plates, in the last section of the reheating furnace, before arrival in the bending station, are partly supported by a flow of hot gas directed upwards, for the purpose of avoiding deformations caused by their self-weight.

11. Installation intended for carrying out the process according to the preceding claims, having a reheating furnace for the plates, a bending station into which the plates to be bent are brought on a horizontal conveyor device (1), a curved surface (2) installed above the conveyor device (1), at least one fan (28) disposed beneath the conveyor device for delivering a flow of hot gas, a carrier device (5) for the bent plates and a cooling station, characterized in that the curved surface has the configuration for bending the plates according to the desired profile, in that the fan (28) is a transverse flow fan, and in that there are also provided means for regulating the flow rate and the pressure of the hot gas at least between values at which the plates are applied onto the bending mould to be bent there and reduced values at which the plates descend again having, however, a large fraction of their weight equilibrated by the pressure of the gas.

12. Device according to claim 11, characterized in that, above the bending station, there is provided for the flow of gas, an extraction hood (10) which is connected by a tubular duct (11) with the supply duct (29) for the transverse flow fan (28), in order to constitute a closed circuit system.

13. Device according to one of claims 11 or 12, characterized in that, for creating a flow of gas at alternatively high and low pressure, two transverse flow fans (61, 63) are disposed side-by-side, the one supplying a high pressure flow, the other a low pressure flow, the delivery ducts (60, 62) from each fan discharging into a common delivery duct (6) and a control damper (64) bringing the one or the other of the individual delivery ducts alternatively into communication with the common duct.

14. Device according to one of claims 11 and 12, characterized in that, for creating a flow of gas at alternatively high and low pressure, an opening (100) having its aperture adjustable by a damper (101) is provided in the duct from the fan (28).

15. Device according to one or more of claims 11 to 14, characterized in that the flow rate and the pressure of the gas flow delivered by a transverse flow fan (28) are adjustable by regulating the regime of the motor driving said fan.

16. Device according to one of claims 11 to 15, characterized in that heating means are provided in the system of ducts of the fans.

17. Device according to one of claims 11 to 16, characterized in that deflectors (44) are provided in the delivery duct below the conveyor device (1).

18. Device according to one of claims 11 to 17, characterized in that horizontally disposed diaphragms are provided in the delivery duct (6).

19. Device according to one or more of claims 11 to 18, characterized in that the dimensions of the bending mould (2) correspond substantially to the dimensions of the plates (14).

20. Device according to one or more of claims 11 to 18, characterized in that the bending mould (2) is of dimensions smaller by the order of 5 to 10 mm than the dimensions of the plates (14) to be bent.

21. Device according to one or more of claims 11 to 20, characterized in that the bending mould (2) installed above the conveyor device (1) can be raised and lowered.

22. Application of the process according to one or more of claims 1 to 10 for the simultaneous bending of several plates of glass (14) disposed one above another.

**Patentansprüche**

1. Verfahren zum Biegen von Platten aus thermoplastischem Material, insbesondere von Glasplatten (14), in horizontaler oder annähernd horizontaler Lage, bei dem die Glasplatten (14) auf einer horizontalen Fördereinrichtung (1) durch einen Erwärmungsofen in eine sich an diesen anschließende Biegestation gefördert werden, in der die Platten (14) mit Hilfe von aufwärts strömendem Gas von der Fördereinrichtung (1) abgehoben und gegen eine oberhalb der Fördereinrichtung angeordnete gekrümmte Oberfläche (2) angehoben und anschließend auf eine Tragvorrichtung (5) abgelegt werden, sich unterhalb der gekrümmten Oberfläche befindet, gegen die die Platten (14) angehoben werden, und die Platten (14) mit dieser Tragvorrichtung (5) in eine nachgeschaltete Kühlstation verbracht werden, dadurch gekennzeichnet, daß die Platten (14) durch das Anheben gegen die obere gekrümmte Oberfläche (2) die Form annehmen, in die sie gebogen werden sollen, so daß die obere gekrümmte Oberfläche (2) diese Form besitzt und daher eine Biegeform darstellt, daß der Volumenstrom und der Druck des heißen Gases so eingestellt werden, daß die Glasplatten (14) gegen die Biegeform (2) angehoben und dort durch den Gasdruck gebogen werden, und daß der Volumenstrom und der Gasdruck anschließend nach dem Biegen der Platten (14) zum Ablegen auf die Tragvorrichtung (5) auf einen Hert abgesenkt werden, durch den ein wesentlicher Teil den Eigengewichts der Platten noch durch den Gadruck ausgeglichen wird.

2. Verfahren nach Anspruch 1, dadurch gekennzeichnet, daß der Volumenstrom und der Druck des heißen Gases so geregelt werden, daß der unterhalb der Platten (14) wirkende dynamische Druck während des Biegevorgangs größenordnungsmäßig 1000 bis 4000 Pa (100 bis 400 mm WS), und außerhalb des Biegevorgangs größenordnungsmäßig 50 bis 300 Pa (5 bis 30 mm WS) beträgt.

3. Verfahren nach Anspruch 1 und 2, dadurch gekennzeichnet, daß auf die Platten (14) ein heißer Gasstrom mit einem gleichförmigen Strömungsprofil ohne Druckspitzen und störende Turbulenzen zur Einwirkung gebracht wird.

4. Verfahren nach Anspruch 1 und 2, dadurch gekennzeichnet, daß auf die Platten (14) ein heißer Gasstrom mit einem Strömungsprofil zur Einwirkung gebracht wird, das einen höheren Druck im Bereich der Randzonen der Glasplatten (14) aufweist, jedoch ohne ausgeprägte Druckspitzen und störende Turbulenzen ist.

5. Verfahren nach den Ansprüchen 1 bis 4, dadurch gekennzeichnet, daß der heiße Gasstrom in einem geschlossenen Kreislauf geführt wird.

6. Verfahren nach den Ansprüchen 1 bis 5, dadurch gekennzeichnet, daß die Platten (14) mit Hilfe eines heißen Gasstroms gebogen werden, dessen Querschnitt etwa der Fläche der zu biegenden Glasscheiben entspricht.

7. Verfahren nach einem der Ansproche 1 bis 6, dadurch gekennzeichnet, daß zum Erzeugen eines heißen Gasstroms mit abwechseln hohem und niedrigem Volumenstrom und Druck ein den Gasstrom mit niedrigem Druck liefernder Ventilator (63) und ein den Gasstrom mit hohem Druck liefernder Ventilator (61) verwendet werden, wobei die beiden Ventilatoren (63, 61) angetrieben sind und deren Gasströme mit Hilfe einer Umschaltklappe (64) abwechselnd gegen die Platten gerichtet werden.

8. Verfahren nach einem der Ansprüche 1 bis 7, dadurch gekennzeichnet, daß die Tragvorrichtung, auf der die Platten nach dem Biegen abgelegt werden, nach dem eigentlichen Biegevorgang in die Biegestation eingefahren wird.

9. Verfahren nach einem oder mehreren der Ansprüche 1 bis 7, dadurch gekennzeichnet, daß die Platten für den Transport durch den Erwärmungsofen in die Biegestation auf einer ringförmigen Transportvorrichtung (5) in Form eines Rahmens aufgelegt und nach dem Biegen wieder auf dieser rahmenförmigen Transportvorrichtung abgelegt werden.

10. Verfahren nach einem oder mehreren der Ansprüche 1 bis 9, dadurch gekennzeichnet, daß die Platten im letzten Abschnitt des Erwärmungsofens vor dem Eintritt in die Biegestation zur Vemeidung von durch ihr Eigengewicht hervorgerufenen Verformungen durch einen von unten nach oben gerichteten heißen Gasstrom unterstützt werden.

11. Vorrichtung zur Durchführung des Vefahrens nach einem der vorangehenden Ansprüche, mit einem Erwärmungsofen für die Platten, einer Biegestation, in die die zu biegenden Glasscheiben auf einer horizontalen Fördervorrichtung (1) eingefahren werden, einer oberhalb der Fördervorrichtung (1) angeordneten gekrümmten Oberfläche (2), wenigstens einem unterhalb der Fördervorrchtung angeordneten Ventilator (28) zur Erzeugung eines heißen Gasstroms, einer Transportvorrichtung (5) für die gebogenen Platten und einer Kühlstation, dadurch gekennzeichnet, daß die gekrümmte Oberfläche die Form aufweist, die nötig ist, um die Platten entsprechend dem gewünschten Profil zu biegen, daß der Ventilator (28) ein Querstromventilator ist, und daß Mittel zur Regelung des Volumenstroms und des Drucks des heißen Gases zwischen denjenigen Werten vorgesehen sind, bei denen sie zum Zwecke des Biegens gegen die Biegeform angedrückt werden, und niedrigeren Werten, bei denen die Platten wieder abgelegt werden, jedoch ein wesentlicher Teil ihres Gewichtes durch den Gasdruck ausgeglichen wird.

12. Vorrichtung nach Anspruch 11, dadurch gekennzeichnet, daß oberhalb der Biegestation eine Abzugshaube (10) für den Gasstrom vorgesehen ist, die zur Bildung eines geschlossenen Kreislaufs durch eine Rohrleitung (11) mit dem Ansaugkanal (29) des Querstromventilators (28) verbunden ist.

13. Vorrichtung nach Anspruch 11 oder 12, dadurch gekennzeichnet, daß zur Erzeugung eines Gasstroms mit abwechselnd hohem und niedrigem Druck zwei Querstromventilatoren (61, 63) nebeneinander angeordnet sind, von denen der eine einen Gasstrom mit hohem Druck und der andere einen Gasstrom mit niedrigem Druck liefert, und die Ausströmkanäle (60, 62) jedes Ventilators in einen gemeinsamen Strömungskanal (6) münden und eine Steuerklappe (64) vorgesehen ist, die abwechselnd den einen oder den anderen der einzelnen Ausströmkanäle mit dem gemeinsamen Strömungskanal verbindet.

14. Vorrichtung nach einem der Ansprüche 11 oder 12, dadurch gekennzeichnet, daß zur Erzeugung eines Gasstromes mit abwechselnd hohem und niedrigem Druck in dem Kanal des Ventilatos (28) eine Öffnung (100) mit einem durch eine Klappe (101) regelbaren Verschluß vorgesehen ist.

15. Vorrichtung nach einem oder mehreren der Ansprüche 11 bis 14, dadurch gekennzeichnet, daß der Volumenstrom und der Druck des von einem Querstromventilators (28) gelieferten Gasstromes durch eine Drehzahlregelung des Antriebsmotors für den Querstromventilator regelbar ist.

16. Vorrichtung nach einem der Ansprüche 11 bis 15, dadurch gekennzeichnet, daß in dem Rohrleitungssystem der Ventilatoren Mittel zum Aufhelzen vorgesehen sind.

17. Vorrichtung nach einem der Ansproche 11 bis 16, dadurch gekennzeichnet, daß in dem Strömungskanal unterhalb der Fördereinrichtung (1) Strömungsgleichrichter (44) vorgesehen sind.

18. Vorrichtung nach einem der Ansprüche 11 bis 17, dadurch gekennzeichnet, daß in dem Strömungskanal (6) horizontal angeordnete Blenden vorgesehen sind.

19. Vorrichtung nach einem oder mehreren der Ansprüche 11 bis 18, dadurch gekennzeichnet, daß die Abmessungen der Biegeform (2) im wesentlichen den Abmessungen der Platten (14) entsprechen.

20. Vorrichtung nach einem oder mehreren der Ansprüche 11 bis 19, dadurch gekennzeichnet, daß die Biegeform (2) kleinere Abmessungen aufweist als die zu biegenden Platten (14), und zwar um 5 bis 10 mm.

21. Vorrichtung nach einem oder mehreren der Ansprüche 11 bis 20, dadurch gekennzeichnet, daß die oberhalb der Fördereinrichtung (1) angeordnete Biegeform (2) heb- und senkbar angeordnet ist.

22. Anwendung des Verfahrens nach einem oder mehreren der Ansprüche 1 bis 10 zum gleichzeitigen Biegen von mehreren aufeinanderliegenden Glasscheiben.

Fig. 1

0 169 770

**Fig.2**

0 169 770

Fig.3

**Fig. 4**

*Fig. 5*

**Fig.6**

**Fig. 7**